# EUROPÄISCHE PATENTSCHRIFT

(11) **EP 1 062 169 B1**
(45) Veröffentlichungstag und Bekanntmachung des Hinweises auf die Patenterteilung: **28.11.2001**
(21) Anmeldenummer: 99910316.1
(22) Anmeldetag: 02.03.1999
(51) Int. Cl.: B65G 15/24, B62D 65/00, B65G 47/66, B65G 47/54

(54) **VORRICHTUNG ZUR FAHRZEUGBEFÖRDERUNG MIT MINDESTENS ZWEI UMLAUFENDEN FÖRDERBÄNDERN**
DEVICE FOR CONVEYING VEHICLES HAVING AT LEAST TWO REVOLVING CONVEYING BELTS
DISPOSITIF POUR TRANSPORTER DES VEHICULES AVEC AU MOINS DEUX BANDES TRANSPORTEUSES EN ROTATION

(30) Priorität: 10.03.1998 DE 19810200
(43) Veröffentlichungstag der Anmeldung: 27.12.2000
(73) Patentinhaber: Micro Compact Car smart GmbH, 71272 Renningen (DE)
(72) Erfinder: GROSS, Wilfried, D-71271 Renningen (DE); RIES, Johannes, D-71069 Sindelfingen (DE); SCHMIDT, Georg, D-66333 Völklingen (DE)
(86) Internationale Anmeldenummer: EP9901350
(87) Internationale Veröffentlichungsnummer: WO9946188

(56) Entgegenhaltungen:
- DE-A- 1 506 459
- DE-A- 3 217 475
- DE-A- 4 203 848
- US-A- 5 322 156

## Beschreibung

Die Erfindung betrifft eine Vorrichtung zur Fahrzeugbeförderung bei der Herstellung eines Fahrzeuges gemäß Anspruch 1.

Bei der Herstellung eines Fahrzeuges werden im Bereich der Fahrzeugendmontage, der Bandendkontrolle und der Wagenfertigstellung Gurtförderer, ähnlich wie in Waschstraßen, als kostengünstiges Fördermittel zum automatischen Transport der Fahrzeuge eingesetzt. Ein aus der Praxis bekanntes umfangreiches Gurtfördersystem besteht aus einer Vielzahl von Gurtförderern, die in Förderrichtung hintereinander gereiht sind. Diese Gurtförderer sind voneinander unabhängig angetrieben, so daß die Fahrzeuge in den verschiedenen Bereichen unabhängig voneinander bewegt werden können. Durch das Gurtfördersystem können Fahrzeuge von einem Fertigungsbereich auf mehrere nachfolgende parallele Fertigungsbereiche verteilt werden. Darüber hinaus können auch mehrere parallele Fertigungsbereiche auf einen nachfolgenden Fertigungsbereich zusammengeführt werden. Mit Hilfe des Gurtfördersystems können Puffer geschafft werden um einzelne Fertigungsbereiche zu entkoppeln. Gurtfördersysteme werden sowohl in den einzelnen Fertigungsbereichen als auch als Transportmittel zwischen zwei Fertigungsbereichen eingesetzt. Aspekte der Arbeitssicherheit und der Ergonomie besitzen bei der Technik der Gurtförderer einen hohen Stellenwert, da sich dieses Fördersystem meist im direkten Arbeitsbereich von Arbeitern befindet.

Die bisher aus der Praxis bekannten Gurtförderer zur Fahrzeugbeförderung sind mit Transportmitnehmern ausgerüstet. Diese Mitnehmer werden in Form von Überhöhungen ausgeführt, welche auf die glatte Gurtoberfläche aufvulkanisiert werden. Die Mitnehmer stellen einen Widerstand dar, womit der Transport der Fahrzeuge auf dem Gurtförderer sichergestellt und gleichzeitig das Wegrollen des Fahrzeuges verhindert wird. Dazu müssen die Mitnehmer in ihrem Abstand zueinander auf den Raddurchmesser und den Radstand des Fahrzeuges abgestimmt werden. Die Mitnehmer werden derart an der Gurtoberfläche angebracht, daß sich jeweils vor und hinter einem Rad ein Mitnehmer befindet. Somit lassen sich mit den aufvulkanisierten Mitnehmern jeweils nur bestimmte Fahrzeugtypen transportieren, deren Achsabstand und deren Raddurchmesser an die Gurtförderer angepaßt ist. Ein Fahrzeugmixbetrieb, d.h. daß verschiedene Modelle bzw. gleiche Modelle mit verschiedenem Radstand und/oder unterschiedlichen Radgrößen auf demselben Band transportiert werden können, ist nicht möglich. Bei einer Modeländerung ist es daher notwendig, daß ein neues Gurtfördersystem eingesetzt wird, bzw. daß die Mitnehmer neu positioniert werden.

Bei der Übergabe des Fahrzeugs von einem auf den nächsten Gurtförderer wird das Fahrzeug über eine unbewegliche Abdeckung bzw. Zwischenglied transportiert. Dies erfolgt dadurch, daß zuerst die vordere Achse mit ihren frei rollenden Fahrzeugrädern über die Abdeckung geschoben wird. Die notwendige Bewegung wird dabei durch die Mitnehmer an den Hinterrädern erzeugt. Nachdem das Fahrzeug mit seiner Vorderachse über die Abdeckung geschoben worden ist, greifen die Mitnehmer des folgenden Förderers die Räder der Vorderachse und ziehen die Räder der hinteren Achse über die Abdeckung auf den folgenden Förderer. Um ein reibungsloses Funktionieren dieses Beförderungsverfahrens gewährleisten zu können ist es notwendig, daß die Stellung der Mitnehmer der beiden Gurtförderer durch Synchronisation aufeinander abgestimmt sind. Diese Synchronisation ist sehr aufwendig und kostenintensiv vor allem, wenn mehr als zwei Gurtförderer hintereinander angeordnet sind, die sich gleichzeitig bewegen sollen.

Ein Entfernen bzw. Weglassen der Abdeckung ist nicht möglich, da ein bestimmter Abstand zwischen den Förderern notwendig ist, der zum Nachspannen der elastischen Gurte vorgehalten werden muß. Auch bei Fördersystemen, die mit Drehscheiben ausgestattet sind, muß ein gewisser Abstand zwischen den Gurtförderern und der Drehscheibe eingehalten werden um die Drehbewegung ausführen zu können.

Nachteilig bei den Mitnehmern ist außerdem die Arbeitssicherheit. Da die Gurtförderer meist im direkten Arbeitsbereich von Arbeitern eingesetzt werden, stellen sie Stolperstellen dar. Darüber hinaus befindet sich an der Stelle an der der Gurt umgelenkt und zurückgeführt wird ein weiteres Sicherheitsrisiko. Aufgrund der Mitnehmer muß der Spalt zwischen der Stelle an der der Gurt umgelenkt wird und der Abdeckung größer als 30 mm sein, damit die Mitnehmer ebenfalls umgelenkt werden können. Bei der Größe dieses Spaltes besteht die Gefahr, daß der Fuß einer Person erfaßt und in den Spalt gezogen wird.

Aus der DE 42 03 848 A1 ist eine Güterwageneinheit, bestehend aus Endwagen und kurzgekuppelten Mittelwagen für den Autotransport bekannt, bei denen die Autos mittels auf dem Güterwagen angeordneten Transportbänder verfahrbar sind. Dabei sind die Transportbänder in Wagenlängsrichtung versetzt angeordnet, damit eine fahrdynamische Bewegung der Güterwagen möglich ist.

Die DE 42 03 848 A1 bezieht sich dabei nicht auf das erfindungsgemäß vorgesehene Einsatzgebiet, ihr liegt eine völlig andere Aufgabenstellung und eine daraus resultierende unterschiedliche Lösung zugrunde. Eine konkrete Lösung wie das Transportband in vorteilhafter Weise ausgebildet sein soll bzw. wie ein sicherer verrutschenfreier Transport der Fahrzeuge erreicht werden kann, geht ebenfalls nicht aus der DE 42 03 848 A1 hervor.

Der Erfindung liegt die Aufgabe zugrunde, eine Vorrichtung zur Fahrzeugbeförderung zu schaffen, mit der Fahrzeuge mit unterschiedlichem Radstand transportiert werden können und die ein problemloses und kostengünstiges Übergeben der Fahrzeuge von einem Förderband auf ein weiteres Förderband ermöglicht ohne Aspekte der Arbeitssicherheit und der Ergonomie zu beeinträchtigen.

Diese Aufgabe wird erfindungsgemäß durch die Merkmale des Anspruchs 1 gelöst.

Dadurch, daß die Vorrichtung zur Fahrzeugbeförderung aufgrund der Zwischenrolle ohne aufvulkanisierte Mitnehmer auskommt, müssen die hintereinander angeordneten Förderbänder nicht mehr exakt aufeinander synchronisiert werden. Außerdem können die Belange des Personenschutzes problemlos erfüllt werden, da zwischen der angetriebenen Umlenkrolle, an der der Gurt umgelenkt wird und der Abdeckung bzw. dem Zwischenglied nur noch ein sehr kleiner Spalt notwendig ist. Bisher mußte an dieser Stelle ein mindestens 30 mm großer Spalt vorhanden sein, damit die Mitnehmer zwischen der Umlenkrolle und der Abdeckung einlaufen konnten. Ein weiterer Aspekt der Arbeitssicherheit wird dadurch erzielt, daß Verletzungen durch die Mitnehmer, die im Arbeitsbereich Stolperstellen darstellen, vermieden werden.

Durch die erfindungsgemäße Vorrichtung zur Fahrzeugbeförderung können verschiedene Fahrzeugtypen transportiert werden, da der Transport unabhängig vom Achsabstand bzw. vom Durchmesser der Räder ist. Es ist lediglich erforderlich, daß die auf den Förderbändern befindlichen Fahrzeuge gegen ein Wegrollen gesichert werden. Dies kann zum Beispiel durch einen eingelegten Gang oder eine angezogene Handbremse erfolgen.

Durch die angetriebene Zwischenrolle können die Verbindungsstellen zwischen zwei Förderbändern von den zu fördernden Fahrzeugen in vorteilhafter Weise überwunden werden. Vorteilhaft ist dabei außerdem, daß sich die angetrieben Zwischenrolle einfach herstellen und einsetzen läßt und sich in der Praxis gezeigt hat, daß der Betrieb besonders störungsfrei und wartungsarm möglich ist.

Vorteilhafte Weiterbildungen und Ausgestaltungen der Erfindung sind in den weiteren Unteransprüchen beschrieben.

Ausführungsbeispiele der Erfindung sind anhand der Zeichnung prinzipmäßig beschrieben.

Es zeigt:
- Fig. 1: Seitenansicht einer Vorrichtung zur Fahrzeugbeförderung mit zwei Förderbändern und einer angetriebenen Zwischenrolle;
- Fig. 2: Draufsicht auf eine Vorrichtung zur Fahrzeugbeförderung mit einer Drehscheibe und daran angeordneten Zwischenrollen;
- Fig. 3: Seitenansicht einer Drehscheibe nach Fig. 2;
- Fig. 4: Seitenansicht einer Vorrichtung zur Fahrzeugbeförderung mit einem Förderglied und zwei horizontal verschiebbaren Platten die mit angetriebenen Rollen versehen sind; und
- Fig. 5: Seitenansicht einer Vorrichtung zur Fahrzeugbeförderung mit zwei Förderbändern und einer erhöht angeordneten Zwischenrolle.

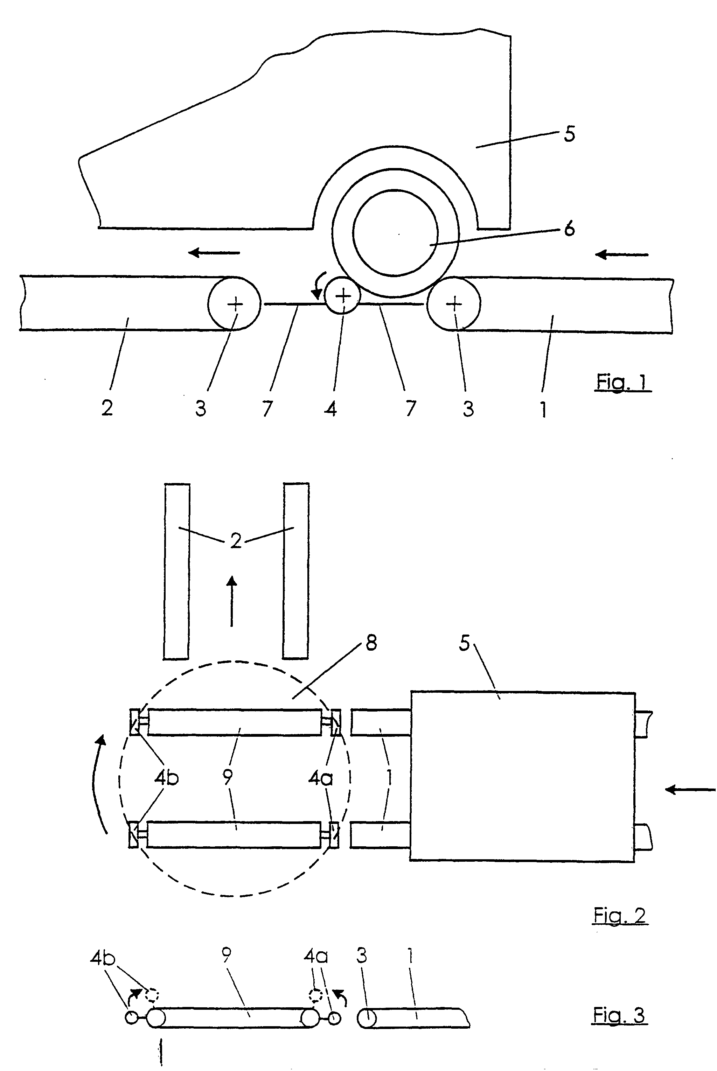

Fig. 1 zeigt eine Vorrichtung zur Fahrzeugbeförderung bei der Herstellung eines Fahrzeugs mit einem in Förderrichtung liegendem ersten Förderband 1 und einem zweiten Förderband 2. Die Förderbänder 1, 2 werden von angetriebenen Umlenkrollen 3 bewegt. An den Umlenkrollen 3 werden die Gurte der Förderbänder 1, 2 umgelenkt.

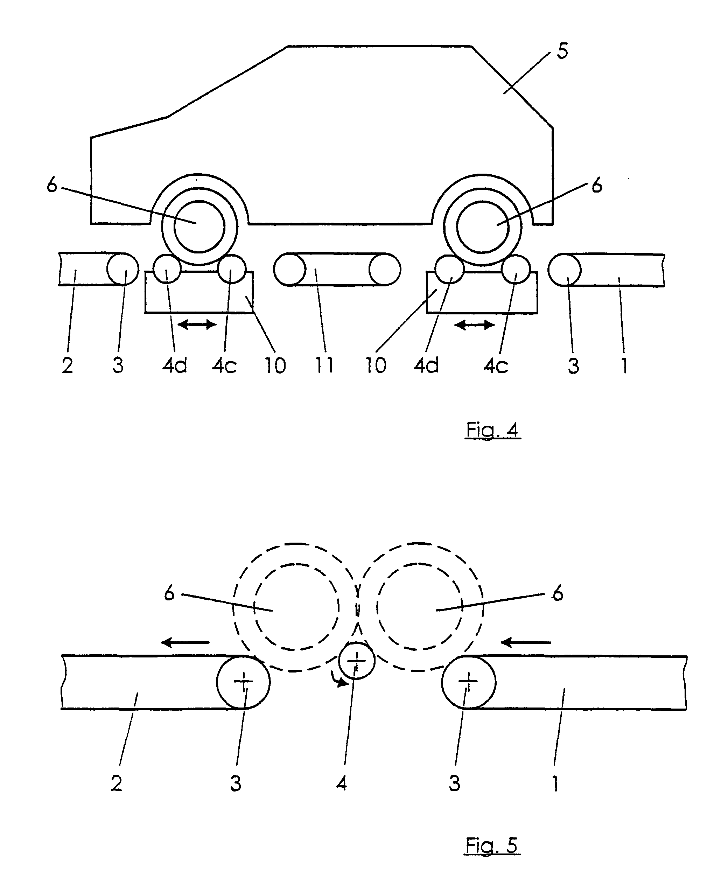

Zwischen den Förderbändern 1, 2 befindet sich eine angetriebene Zwischenrolle 4. Die Zwischenrolle 4 kann, wie in Fig. 5 erkennbar, gegenüber den Förderbändern 1, 2 derart erhöht angeordnet sein, daß der Durchmesser und die Lage der Achse der Zwischenrolle 4 so angeordnet ist, daß die zylindrische Umfangswand der Zwischenrolle 4 höher liegt als die Oberfläche der Förderbänder 1, 2. Somit können an den Reibbeiwert der Oberfläche des nachfolgenden Förderers geringere Anforderungen gestellt werden. Um eine absolut sichere Beförderung zu gewährleisten ist die Zwischenrolle 4 mit einer reibungserhöhenden Beschichtung versehen.

Wie aus Fig. 1 ersichtlich, werden mit der Vorrichtung zur Fahrzeugbeförderung komplette Fahrzeuge 5 mit bereits montierten Rädern 6 befördert. Die Beförderung des Fahrzeuges 5 von dem Förderband 1 auf das Förderband 2 erfolgt mit Hilfe der Zwischenrolle 4. Unterhalb der Ebene der Horizontalachse der Zwischenrolle 4 befindet sich zu beiden Seiten der Zwischenrolle 4 jeweils eine Abdeckung 7. Die Abdeckungen 7 sind derart zwischen den Förderbändern 1, 2 und der Zwischenrolle 4 angeordnet, daß die Räder 6 des Fahrzeuges 5 keinen Kontakt mit den Abdeckungen 7 erhalten.

Zur Beförderung des Fahrzeuges 5 werden die Räder 6 einer oder mehrerer Fahrzeugachsen durch Betätigen der Handbremse oder das Einlegen eines Ganges blockiert. Somit wird gewährleistet, daß das Fahrzeug 5 problemlos transportiert werden kann. Das Förderband 1 schiebt die Räder 6 und somit das Fahrzeug 5 in Förderrichtung auf die Zwischenrolle 4. Die Zwischenrolle 4 erfaßt die Räder 6 und befördert diese auf das Förderband 2. Dadurch, daß die Zwischenrolle 4 gegenüber dem Förderband 2 erhöht angeordnet ist, ist eine Übergabe der Räder 6 besonders leicht möglich.

Die Abdeckung 7 kann zwei Abdeckplatten aufweisen, die vor und hinter der Zwischenrolle 4 angeordnet sind. Der Spalt zwischen den Abdeckplatten 7 und den Antriebstrommeln 3 kann auf unter 8 mm reduziert werden. Somit können die Belange des Personenschutzes, die einen Spalt fordern, der 8 mm nicht übersteigen soll, erfüllt werden.

Fig. 2 zeigt eine Draufsicht auf eine Vorrichtung zur Fahrzeugbeförderung mit einer Drehscheibe 8. Diese Drehscheibe 8 befindet sich zwischen dem Förderband 1 und dem Förderband 2. Die Drehscheibe 8 ist mit einer Beförderungseinrichtung 9 versehen. An den Enden der Beförderungseinrichtung 9 der Drehscheibe 8 sind hintere Zwischenrollen 4a und vordere Zwischenrollen 4b angeordnet. Wie in Fig. 3 erkennbar sind die hinteren Zwischenrollen 4a und die vorderen Zwischenrollen 4b vertikal schwenkbar. Hierzu dienen Hebel, die an einem Ende um eine horizontale Achse schwenkbar an der Beförderungseinrichtung 9 angeordnet sind und die am anderen Ende die Zwischenrollen 4a bzw. 4b tragen. Zur Beförderung eines Fahrzeuges 5 von dem Förderband 1 auf das Förderband 2 wird das Fahrzeug 5 durch das Förderband 1 auf die Drehscheibe 8 mit Hilfe der hinteren Zwischenrollen 4a geschoben. Auf der Drehscheibe 8 wird das Fahrzeug 5 durch die Beförderungseinrichtung 9 so lange in Förderrichtung bewegt bis sich das Fahrzeug 5 komplett auf der Drehscheibe 8 befindet. Während dieses Transportvorganges sind die vorderen Zwischenrollen 4b hochgeschwenkt und stehen still. Sie dienen somit als Anschlagpuffer zur genauen Positionierung des Fahrzeuges. Während der Drehbewegung der Drehscheibe 8 werden sowohl die vorderen Zwischenrollen 4b als auch die hinteren Zwischenrollen 4a hochgeschwenkt und stehen still. Nach Beendigung der Drehbewegung werden die vorderen Zwischenrollen 4b wieder abgeschwenkt und gemeinsam mit der Beförderungseinrichtung 9 in Förderrichtung angetrieben. Somit wird das Fahrzeug 5 aus der Drehscheibe 8 auf das Förderband 2 transportiert, das um 90° versetzt gegenüber der Förderrichtung von Förderband 1 angeordnet ist.

Fig. 4 zeigt eine Vorrichtung zur Fahrzeugbeförderung mit zwei horizontal verschiebbaren Platten 10 und einem dazwischen angeordneten Förderglied 11. Die horizontal verschiebbaren Platten 10 sind jeweils mit einer hinteren Rolle 4c und einer vorderen Rolle 4d versehen. Die horizontal verschiebbaren Platten 10 weisen Schwimmplatten zur Anpassung an den Achsabstand des zu transportierenden Fahrzeugs auf. Die in Fig. 4 dargestellte Vorrichtung zur Fahrzeugbeförderung dient als Fahrwerk-Einstellstand. Aufgrund der horizontalen Verschiebbarkeit der Platten 10 lassen sich diese problemlos auf den Achsabstand des Fahrzeuges 5 einstellen. Die vorderen Räder 6 werden durch das Förderglied 11 und die hinteren Räder 6 durch das Förderband 1 auf die horizontal verschiebbaren Platten 10 transportiert. Bei der Übergabe der Räder 6 des Fahrzeuges 5 auf die horizontal verschiebbaren Platten 10 sind die hinteren Rollen 4c angetrieben während die vorderen Rollen 4d stehen. Somit stellt sich automatisch der dem Fahrzeug entsprechende Achsabstand zwischen den beiden horizontal verschiebbaren Platten 10 ein. Während den Einstellarbeiten stehen die hinteren Rollen 4c und die vorderen Rollen 4d still. Um das Fahrzeug 5 auf das Förderband 2 zu transportieren, werden sowohl die hinteren Rollen 4c als auch die vorderen Rollen 4d und die Beförderungseinrichtung 9 angetrieben.

Zur Überbrückung von größeren Abständen zwischen dem Förderband 1 und dem Förderband 2 lassen sich auch mehrere der in Fig. 1 und Fig. 5 dargestellten Zwischenrollen 4 hintereinander anordnen.

Mit Hilfe der in Fig. 2 dargestellten Drehscheibe 8 lassen sich Fahrzeuge 5 auf mehrere in Förderrichtung über den Umfang der Drehscheibe 8 mit Abstand voneinander liegende Förderbänder 2 verteilen. Somit können die Förderbänder 2 als Puffer dienen oder zur Verteilung auf mehrere Fertigungslinien.

## Patentansprüche

1. Vorrichtung zur Fahrzeugbeförderung bei der Herstellung eines Fahrzeuges
1.1 mit mindestens zwei in Förderrichtung hintereinander gereihten umlaufenden Förderbändern (1,2), wobei wenigstens ein Förderband (1,2) eine glatte, transportmitnehmerfreie Oberfläche aufweist,
1.2 wobei das Fahrzeug (5) auf dem Förderband (1, 2) durch ein Blockieren von Rädern (6) gegen ein Wegrollen gesichert ist,
1.3 mit einem Zwischenglied, das wenigstens teilweise den Abstand zwischen den Förderbändern überbrückt, und
1.4 wobei das Zwischenglied eine angetriebene Zwischenrolle (4), deren Achse quer zu den Förderbändern (1,2) liegt, aufweist.

2. Vorrichtung nach Anspruch 1,
**dadurch gekennzeichnet, daß**
die Zwischenrolle (4) gegenüber den Förderbändern (1,2) erhöht angeordnet ist.

3. Vorrichtung nach Anspruch 1 oder 2,
**dadurch gekennzeichnet, daß**
die Zwischenrolle (4) mit einer reibungserhöhenden Beschichtung versehen ist.

4. Vorrichtung nach Anspruch 1, 2 oder 3,
**dadurch gekennzeichnet, daß**
wenigstens eine Abdeckung (7) zwischen den Förderbändern (1,2) derart angeordnet ist, daß die Abstände zwischen der Zwischenrolle (4) und den Förderbändern (1,2) abgedeckt sind.

5. Vorrichtung nach Anspruch 4,
**dadurch gekennzeichnet, daß**
die Abdeckung (7) zwei Abdeckplatten aufweist, die vor und hinter der Zwischenrolle (4) angeordnet sind.

6. Vorrichtung nach einem der Ansprüche 1 bis 5,
**dadurch gekennzeichnet, daß**
mehrere Zwischenrollen (4) hintereinander angeordnet sind.

7. Vorrichtung nach einem der Ansprüche 1 bis 6,
**dadurch gekennzeichnet, daß**
die Zwischenrollen (4) auf einer Drehscheibe (8) angeordnet sind.

8. Vorrichtung nach Anspruch 7,
**dadurch gekennzeichnet, daß**
die Drehscheibe (8) eine Beförderungseinrichtung (9) aufweist.

9. Vorrichtung nach Anspruch 7 oder 8,
**dadurch gekennzeichnet, daß**
auf der Drehscheibe (8) eine vordere Zwischenrolle (4b) und/oder eine hintere Zwischenrolle (4a) vertikal schwenkbar an den Enden der Beförderungseinrichtung (9) der Drehscheibe (8) angeordnet sind.

10. Vorrichtung nach einem der Ansprüche 1 bis 9,
**dadurch gekennzeichnet, daß**
das Zwischenglied zwei horizontal verschiebbare Platten (10) aufweist, die an ihrer einem Fahrzeug (5) zugewandten Seite mit jeweils einer hinteren Rolle (4c) und einer vorderen Rolle (4d) versehen sind, wobei sich zwischen den horizontal beweglichen Platten (10) ein Förderglied (11) befindet.

## Claims

1. Device for conveying a motor vehicle during the building of a motor vehicle
1.1 having at least two conveyor belts (1, 2) running in series one behind the other in the conveying direction, at least one conveyor belt (1,2) having a smooth, non-transport-driving surface,
1.2. the vehicle (5) being secured on the conveyor belt (1, 2) by blocking wheels (6) to prevent them from rolling,
1.3 having an intermediate member, which at least partially bridges the distance between the conveyor belts and
1.4 the intermediate member having a driven intermediate roller (4), the axis of which lies transversely to the conveyor belts (1, 2).

2. Device as claimed in claim 1,
**characterised in that**
the intermediate roller (4) is disposed at a height above the conveyor belts (1,2).

3. Device as claimed in claim 1 or 2,
**characterised in that**
the intermediate roller (4) is provided with a friction-enhancing coating.

4. Device as claimed in claim 1, 2 or 3,
**characterised in that**
at least one cover (7) is arranged between the conveyor belts (1, 2) so that the distances between the intermediate roller (4) and the conveyor belts (1, 2) are covered.

5. Device as claimed in claim 4,
**characterised in that**
the cover (7) has two cover plates which are disposed in front of and behind the intermediate roller (4).

6. Device as claimed in one of claim s 1 to 5,
**characterised in that**
several intermediate rollers (4) are arranged one behind the other.

7. Device as claimed in one of claims 1 to 6,
**characterised in that**
the intermediate rollers (4) are arranged on a turntable (8).

8. Device as claimed in claim 7,
**characterised in that**
the turntable (8) has a conveyor system (9).

9. Device as claimed in claim 7 or 8,
**characterised in that**
a front intermediate roller (4b) and/or a rear intermediate roller (4a) on the turntable (8) is disposed so as to pivot vertically at the ends of the conveyor system (9) of the turntable (8).

10. Device as claimed in one of claims 1 to 9,
**characterised in that**
the intermediate member has two horizontally slidable plates (10), each being provided with a rear roller (4c) and a front roller (4d) on its side facing a vehicle (5), a conveyor member (11) being located between the horizontally displaceable plates (10).

## Revendications

1. Dispositif pour le transport de véhicules lors de la fabrication d'un véhicule
1.1 comportant au moins deux tapis transporteurs rotatifs (1, 2) disposés en rangée l'un derrière l'autre selon la direction du transport, au moins un tapis transporteur (1, 2) présentant une surface lisse, exempte d'entraîneurs de transport,
1.2 dans lequel le véhicule (5), sur le tapis transporteur (1, 2), est assuré, par un blocage des roues (6), à l'égard d'un roulement qui l'entraînerait,
1.3 comportant un élément intermédiaire qui franchit au moins partiellement la distance entre les tapis transporteurs,
1.4 dans lequel l'élément intermédiaire présente un rouleau intermédiaire entraîné (4) dont l'axe est orienté transversalcmcnt par rapport aux tapis transporteurs (1, 2).

2. Dispositif selon la revendication 1, **caractérisé par le fait que** le rouleau intermédiaire (4) est disposé surélevé par rapport aux tapis transporteurs (1, 2).

3. Dispositif selon la revendication 1 ou 2, **caractérisé par le fait que** le rouleau intermédiaire (4) présente un revêtement accroissant le frottement.

4. Dispositif selon la revendication 1, 2 ou 3, **caractérisé par le fait qu'**au moins une couverture (7) est disposée entre les tapis transporteurs (1, 2) de façon que les distances entre le rouleau intermédiaire (4) et les tapis transporteurs (1, 2) soient couvertes.

5. Dispositif selon la revendication 4, **caractérisé par le fait que** la couverture (7) présente deux panneaux de couverture qui sont disposés devant et derrière le rouleau intermédiaire (4).

6. Dispositif selon l'une des revendications 1 à 5, **caractérisé par le fait que** plusieurs rouleaux intermédiaires (4) sont disposés l'un derrière l'autre.

7. Dispositif selon l'une des revendications 1 à 6, **caractérisé par le fait que** les rouleaux intermédiaires (4) sont disposés sur un plateau tournant (8).

8. Dispositif selon la revendication 7, **caractérisé par le fait que** le plateau tournant (8) présente un mécanisme de transport (9).

9. Dispositif selon la revendication 7 ou 8, **caractérisé par le fait que** sur le plateau tournant (8) sont disposés, aux extrémités du mécanisme de transport (9) du plateau tournant (8), avec liberté de pivotement selon la direction verticale, un rouleau intermédiaire avant (4b) et/ou un rouleau intermédiaire arrière (4a).

10. Dispositif selon l'une des revendications 1 à 9, **caractérisé par le fait que** l'élément intermédiaire présente deux panneaux (10) qui peuvent coulisser horizontalement, dont chacun présente, sur sa face orientée vers un véhicule (5), un rouleau arrière (4c) et un rouleau avant (4d), un élément transporteur (11) se trouvant entre les panncaux (10) mobiles horizontalement.
